# EUROPÄISCHE PATENTSCHRIFT

(11) **EP 2 021 677 B1**
(45) Veröffentlichungstag und Bekanntmachung des Hinweises auf die Patenterteilung: **14.10.2009**
(21) Anmeldenummer: 07725473.8
(22) Anmeldetag: 23.05.2007
(51) Int. Cl.: F16L 55/38, B05B 12/14

(54) **MOLCH MIT VERBESSERTER DICHTWIRKUNG**
PIG WITH AN IMPROVED SEAL EFFECT
ÉCOUVILLON AVEC EFFET D'ÉTANCHÉITÉ AMÉLIORÉ

(30) Priorität: 01.06.2006 DE 102006025546
(43) Veröffentlichungstag der Anmeldung: 11.02.2009
(73) Patentinhaber: EISENMANN Anlagenbau GmbH & Co. KG, 71032 Böblingen (DE)
(72) Erfinder: ALBRECHT, Markus, 74232 Abstatt (DE); REICHLER, Jan, 78465 Konstanz (DE)
(74) Vertreter: Ostertag, Ulrich
(86) Internationale Anmeldenummer: PCT/EP2007/004573
(87) Internationale Veröffentlichungsnummer: WO 2007/137745

(56) Entgegenhaltungen:
- EP-A1- 1 394 464
- EP-A2- 1 108 475
- US-A- 5 625 917

## Beschreibung

Die Erfindung betrifft einen Molch zum Fördern eines Arbeitsmediums innerhalb einer Versorgungsleitung mit
a) einem Molchkörper, welcher innerhalb der Versorgungsleitung von einem Schubmedium antreibbar ist und welcher an einer Stirnseite einen Vorsprung mit einer freien Stirnfläche aufweist;
b) wenigstens einem ersten und einem zweiten an dem Molchkörper angeordneten umlaufenden Dichtelement aus elastomerem Material, welche in Richtung der Längsachse des Molchkörpers voneinander beabstandet sind und koaxial zu der Längsachse des Molchkörpers verlaufen;
   wobei
c) die Dichtelemente gegen die Innenwand der Versorgungsleitung andrückbar sind, indem das Arbeitsmedium oder das Schubmedium eine Kraft gegen eine Angriffsfläche des jeweiligen Dichtelements ausübt.

Ein derartiger Molch ist beispielsweise aus der EP 1 108 475 A2 bekannt und wird z.B. zum Fördern von Lack innerhalb einer Versorgungsleitung, üblicherweise eines Schlauchs, verwendet. Letzterer kann z.B. bei einer Beschichtungsanlage, insbesondere einer Lackieranlage, in an sich bekannter Weise ein Farbreservoir mit einer Pistoleneinheit verbinden. Auch bei der Reinigung entsprechender Versorgungsleitungen mit einem geeigneten Reinigungsmittel kann ein solcher Molch verwendet werden. Häufig wird ein Molch auch eingesetzt, um als Trennglied zwischen zwei flüssigen Arbeitsmedien zu dienen. Zwischen zwei Molchen läßt sich ein bestimmtes Lackvolumen nach Art eines Paketes transportieren.

Bei dem oben genannten Arbeitsmedium kann es sich also z.B. um Lack oder Reinigungsmittel handeln, welches auf einer Seite des Molches innerhalb der Versorgungsleitung vorliegt. Als Schubmedium dient üblicherweise Druckluft, mit welcher der Molch auf der anderen Seite beaufschlagt wird. Auch ein flüssiges Medium kann jedoch als Schubmedium dienen.

Durch die Krafteinwirkung der Druckluft auf der einen Seite des Molches wird dieser gegen das auf der anderen Seite des Molches vorliegende Arbeitsmedium bewegt, wobei beide Dichtelemente der Druckluft bzw. dem Arbeitsmedium jeweils eine Angriffsfläche bieten. Die Druckluft übt also auf der einen Seite des Molches eine Kraft auf die Angriffsfläche des dort vorgesehenen Dichtelements aus, wogegen auf die Angriffsfläche des Dichtelements auf der anderen Seite des Molches eine Kraft durch das Arbeitsmedium ausgeübt wird, welches der Bewegung des Molches einen Widerstand entgegensetzt. Beide Dichtelemente werden als Folge der auf ihre Angriffsflächen ausgeübten Kräfte gegen die Innenwand der Versorgungsleitung angedrückt, wobei die Dichtelemente derart dimensioniert sind, daß sie bereits dichtend an der Innenwand der Versorgungsleitung anliegen, auch wenn der Molch nicht darin bewegt wird. Beim Vortrieb des Molches innerhalb der Versorgungsleitung fahren die Dichtelemente an deren Innenwand entlang, wodurch an der Innenwand haftendes flüssiges Arbeitsmedium abgezogen und in Bewegungsrichtung des Molches vor diesem hergeschoben wird.

Der Vorsprung an einer Stirnseite des Molchkörpers verringert die Wahrscheinlichkeit, daß zwei mit ihren Vorsprüngen aneinanderstoßende Molche durch zwischen diesen vorliegende Lackreste verkleben, da die Molche sich nur mit einer relativ kleinen Fläche berühren können. Es ist wünschenswert, diesen Vorteil zu erhalten. Die bekannten Molche sind zu ihrer Mittelebene symmetrisch ausgebildet, um bidirektional eingesetzt werden zu können. Insbesondere sind beide Dichtelemente als baugleiche Dichtlippen ausgebildet.

Aufgabe der Erfindung ist es, einen Molch der eingangs genannten Art zu schaffen, bei dem die Dichtwirkung während des Vortriebs des Molches innerhalb der Versorgungsleitung verbessert ist.

Diese Aufgabe wird dadurch gelöst, daß
d) die Angriffsfläche des Dichtelements, welches der Stirnseite mit dem Vorsprung benachbart ist, kleiner ist als die Angriffsfläche des anderen Dichtelements.

Im Gegensatz zu bekannten Molchen, bei denen die jeweilige Angriffsfläche der beiden Dichtelemente auf Grund ihrer baugleichen Ausbildung gleich groß ist, wird das Dichtelement mit größerer Angriffsfläche - bei gleicher auf beide Dichtelemente ausgeübter Kraft - mit höherem Druck gegen die Innenwand der Versorgungsleitung angedrückt als das Dichtelement mit kleinerer Angriffsfläche. So ist die Dichtwirkung des Molches während seines Vortriebs innerhalb der Versorgungsleitung insgesamt erhöht.

Gleichzeitig ist es möglich, daß an einer Stirnseite des Molchkörpers der Vorsprung verbleibt, der die Gefahr eines Verklebens zweier Molche verringert.

Vorteilhafte Weiterbildungen der Erfindung sind in den abhängigen Ansprüchen angegeben.

Es ist günstig, wenn das erste und das zweite Dichtelement als erste und zweite Dichtlippe mit einer radial außenliegenden Dichtkante ausgebildet sind. Auf diese Weise wird eine gute Abstreifwirkung an der Innenwand der Versorgungsleitung erzielt.

Produktionstechnisch ist es vorteilhaft, wenn der gesamte Molchkörper und nicht nur die Dichtelemente aus elastomerem Material gebildet ist.

Als elastomeres Material kommt vorzugsweise ein hydrierter Nitrilkautschuk oder ein Fluorelastomer auf der Basis von Vinylidenfluorid-Hexafluorpropylen-Copolymerisaten in Frage, welche handelsüblich und somit einfach zugänglich sind. Ein geeignetes Fluorelastomer ist beispielsweise unter dem Markennamen Viton^{(R)} von Du Pont Dow Elastomers L.L.C. erhältlich.

Was die notwendige Flexibilität angeht, ist es günstig, wenn das elastomere Material eine Härte von 65 bis 100 Shore D aufweist. Vorzugsweise weist das elastomere Material eine Härte von 85 Shore D auf. Bei Härten in den genannten Bereichen ist ein guter Kompromiß zwischen einer für eine aureichende Dichtigkeit notwendigen Flexibilität/Weichheit und einer akzeptablen Materialabnutzung gegeben.

Wenn die freie Stirnfläche des Vorsprungs des Molchkörpers konvex ausgebildet ist, wird die Gefahr eines Verklebens von zwei Molchen, die sich jeweils an dieser freien Stirnfläche berühren, noch weiter vermindert, da die Molche sich lediglich punktförmig berühren können.

Das zum Vorsprung am Molchkörper benachbarte Dichtelement kann dagegen auf günstige Weise gebildet werden, wenn der Molchkörper an der Stirnseite mit dem Vorsprung eine koaxial zur Längsachse des Molchkörpers verlaufende Ringnut aufweist. Eine solche Ringnut kann auf einfache Weise durch Drehen in dem Molchkörper erzeugt werden.

Das Dichtelement mit größerer Angriffsfläche ist einfach zu erzeugen, wenn der Molchkörper an der der Stirnseite mit dem Vorsprung gegenüberliegenden Stirnseite eine bezogen auf die Längsachse des Molchkörpers mittig angeordnete Ausnehmung aufweist. Dabei ist es insbesondere vorteilhaft, wenn die Ausnehmung halbkugelförmig ist.

Um eine Positionserfassung des Molches mit Hilfe bekannter Sensoreinrichtungen zu gewährleisten, ist es vorteilhaft, wenn der Molch aus einem ersten Teil und einem damit verbundenen zweiten Teil gebildet ist und einen Permanentmagneten enthält.

Alternativ ist es vorteilhaft, wenn der Molch eine verschließbare Sackbohrung aufweist, die einen Permanentmagneten aufnimmt. Dabei ist es günstig, wenn die Sackbohrung mit einem Stopfen verschlossen ist, welcher passgenau in die Sackbohrung eingesetzt oder darin verklebt ist, wobei der Stopfen aus dem gleichen Material wie der Molchkörper gefertigt ist.

Was die Sackbohrung angeht, ist diese vorzugsweise auf der Seite der Ausnehmung vorgesehen.

Nachstehend wird ein Ausführungsbeispiel der Erfindung anhand der beigefügten Zeichnung näher erläutert. In dieser zeigen:
- Figur 1: einen erfindungsgemäßen Molch;
- Figur 2: zwei Molche nach Figur 1 in einer Versorgungsleitung innerhalb einer Molchstation; und
- Figur 3: zwei Molche nach Figur 1 in einer Versorgungsleitung, wobei sich zwischen den beiden Molchen ein Arbeitsmedium befindet.

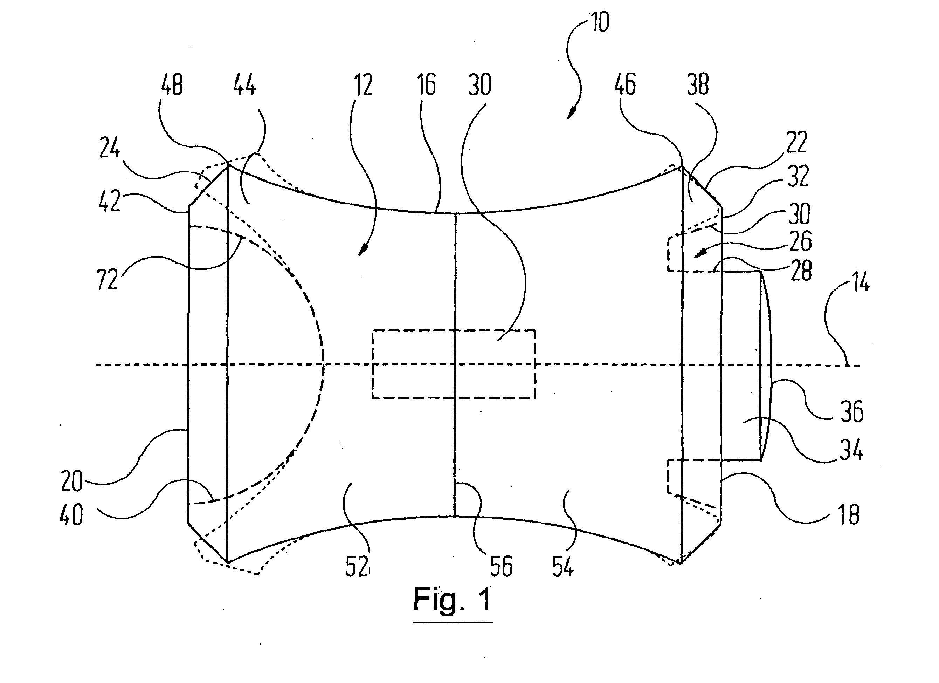

Figur 1 zeigt einen Molch 10 mit einem Molchkörper 12, der rotationssymmetrisch zu seiner Längsachse 14 ausgebildet ist.

Der Molchkörper 12 weist eine konkave Mantelfläche 16 sowie an beiden Stirnseiten 18, 20 jeweils eine radial außenliegende Fase 22 bzw. 24 auf.

Die in Figur 1 rechts liegende Stirnseite 18 ist mit einer zur Längsachse 14 des Molchkörpers 12 koaxialen Ringnut 26 versehen. Deren radial innenliegende Nutwand 28 verläuft parallel zur Längsachse 14 des Molchkörpers 12, wogegen die radial außenliegende Nutwand 30 in Richtung auf die Stirnseite 18 nach außen geneigt ist. Zwischen der radial innenliegenden Kante der Fase 22 und der Ringnut 26 verbleibt eine zur Längsachse 14 des Molchkörpers 12 senkrechte und dazu koaxiale schmale Ringfläche 32. Die innere Nutwand 28 der Ringnut 26 setzt sich in Längsrichtung des Molchkörpers 12 nach außen in einen kreiszylindrischen Vorsprung 34 fort, dessen freie Stirnfläche 36 konvex ausgebildet ist.

Wie in Figur 1 zu erkennen ist, ist durch die oben erläuterte Struktur der Stirnseite 18 des Molchkörpers 12 eine umlaufende Dichtlippe 38 gebildet, welche koaxial zur Längsachse 14 des Molchkörpers 12 verläuft.

Auf der der Stirnseite 18 gegenüberliegenden Stirnseite 20 weist der Molchkörper 12 eine in entspanntem Zustand halbkugelförmige Ausnehmung 40 auf. Diese ist bezogen auf die Längsachse 14 des Molchkörpers 12 zentriert angeordnet und so dimensioniert, daß zwischen ihr und der Innenkante der Fase 24 eine schmale Ringfläche 42 verbleibt. Diese Ringfläche 42 verläuft wie die Ringfläche 32 an der Stirnseite 18 senkrecht und koaxial zur Längsachse 14 des Molchkörpers 12. An der Stirnseite 20 des Molchkörpers 12 ist auf diese Weise eine zweite umlaufende Dichtlippe 44 ausgebildet, welche wie die Dichtlippe 38 koaxial zu der Längsachse 14 des Molchkörpers 12 verläuft.

Die Dichtlippen 38 und 44 sind in Richtung der Längsachse 14 des Molchkörpers 12 voneinander beabstandet und weisen eine radial außenliegende Dichtkante 46 bzw. 48 auf, welche jeweils durch die radial außenliegende Kante der Fase 22 bzw. 24 gebildet ist.

Der Molch 10 umfasst einen Permanentmagneten 50, welcher im Inneren des Molchkörpers 12 vorgesehen, in Richtung der Längsachse 14 des Molchkörpers 12 magnetisiert und koaxial dazu angeordnet ist. Der Permanentmagnet 50 dient in bekannter weise dazu, die Position des Molches 10 innerhalb eines Leitunssystems mittels geeigneter und an sich bekannte Sensoren detektieren zu können.

Der Molchkörper 12 ist aus einem elastomeren Material mit einem Härtegrad von 65 bis 100 Shore D, vorzugsweise von 85 Shore D gefertigt. Hierfür kommt als Material beispielsweise hydrierter Nitrilkautschuk (Hydrogenated Nitrile Rubber, HNBR) in Frage. Eine Alternative besteht in der Verwendung von vulkanisierbaren Fluorelastomeren auf der Basis von Vinylidenfluorid-Hexafluorpropylen-Copolymerisaten. Auch andere elastomere Materialien kommen in Betracht.

Um bei der Herstellung des Molches 10 eine einfache Integration des Permanentmagneten 50 in den Molchkörper 12 zu gewährleisten, ist der Molchkörper 12 zweiteilig ausgebildet. Jedes Teil 52 bzw. 54 (vgl. Figur 1) kann durch Drehen hergestellt werden. Die Teile 52 und 54 können dann nach Einsetzen des Permanentmagneten 50 beispielsweise miteinander verklebt werden, was in Figur 1 durch die punktiert angedeutete Klebefläche 56 dargestellt ist.

Bei einem alternativen, hier nicht dargestellten Ausführungsbeispiel weist der Molch 10 auf der Seite der halbkugelförmigen Ausnehmung 40 eine verschließbare Sackbohrung auf, die den Permanentmagneten 50 aufnimmt und von außen zugänglich ist. Diese Sackbohrung ist mit einem Stopfen verschlossen, welcher passgenau in die Sackbohrung eingesetzt oder darin verklebt ist. Der Stopfen ist aus dem gleichen Material wie der Molch 10 bzw. der Molchkörper 12 gefertigt.

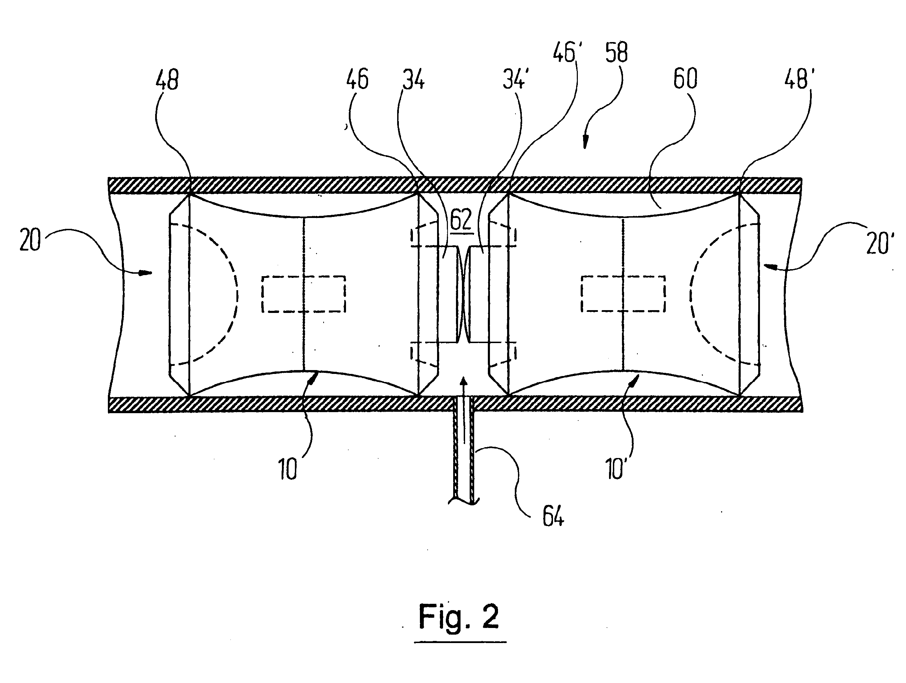

Figur 2 zeigt schematisch eine an sich bekannte Molchstation 58 mit einem Innenraum 60, in welchem zwei Molche 10 und 10' sitzen. Die Molche 10 und 10' sind derart dimensioniert, daß ihre Dichtkanten 46, 48 bzw. 46', 48' an der Innenwand des Innenraums 60 anliegen, auch wenn die Molche 10, 10 nicht bewegt werden. Die beiden Molche 10, 10' sind so angeordnet, daß sich ihre Vorsprünge 34 bzw. 34' gegenüberliegen. In den so gebildeten Zwischenraum 62 zwischen den beiden Molchen.10 und 10' mündet eine durch ein hier nicht näher dargestellten Ventil wahlweise verschließbare und freigebbare Zuführleitung 64.

Wird nun in bekannter Weise eine bestimmte Menge eines Arbeitsmediums, beispielsweise eines Lackes, über die Zuführleitung 64 in den Zwischenraum 62 gefördert, so bewegt sich der Molch 10' von dem Molch 10 weg, wozu letzterer zunächst in seiner Position fixiert ist. Dies kann beispielsweise dadurch erfolgen, daß der Molch 10 auf seiner Stirnseite 20 unter ausreichendem Druck mit Druckluft beaufschlagt wird. Alternativ kann auch ein herkömmlicher, hier nicht dargestellter mechanischer Anschlag auf der Stirnseite 20 des Molches 10 vorgesehen sein.

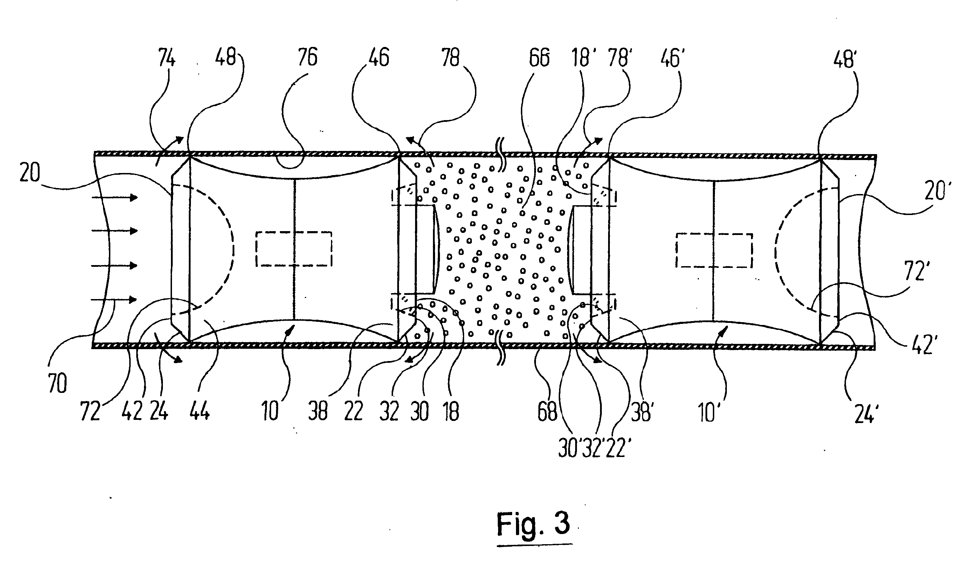

Ist die gewünschte Menge Lack eingefüllt, so befindet sich zwischen den beiden Molchen 10 und 10' ein Lackpaket. Das Ventil in der Molchstation 58 wird geschlossen und das Lackpaket 66 zwischen den beiden Molchen 10 und 10' wird, wie in Figur 3 gezeigt, in eine Versorgungsleitung 68 vorgetrieben, indem der Molch 10 an seiner Stirnseite 20 mit Druckluft beaufschlagt wird, welche als Schubmedium dient. Die Druckluft ist in Figur 3 durch die Pfeile 70 angedeutet.

Der Innenraum 60 der Molchstation 58 in Figur 2 ist fluchtend mit der Versorgungsleitung 68 verbunden und dient selbst als Teil der Versorgungsleitung.

Durch die Druckluft 70 wird auf die Stirnseite 20 des Molches 10 eine Kraft ausgeübt. Diese sorgt zum einen für den Vortrieb des Molches 10. Darüber hinaus übt die Druckluft 70 eine Kraft auf eine Angriffsfläche der Dichtlippe 44 aus. Diese Angriffsfläche ist aus den Flächen der Fase 24, der Ringfläche 42 und eines endseitigen Bereichs 72 der halbkugelförmigen Ausnehmung 40 gebildet. Die auf die Angriffsfläche 24, 42, 72 der Dichtlippe 44 durch die Druckluft 70 ausgeübte Kraft bewirkt, daß die Dichtlippe 44 des Molches 10 nach außen gedrückt wird, was in Figur 1 durch die mit gestrichelten Linien dargestellte Stellung der Dichtlippe 44 und in Figur 3 durch die gekrümmten Pfeile 74 angedeutet ist. Auf diese Weise wird die Dichtkante 48 des Molches 10 gegen die Innenwand 76 der Versorgungsleitung 68 angedrückt.

Auf die der Stirnseite 20 gegenüberliegende Stirnseite 18 des Molches 10 wird beim Vortrieb des Lackpakets 66 ebenfalls eine Kraft ausgeübt. Diese Kraft resultiert aus dem Widerstand des Lackpaketes 66 und des zweiten Molches 10', den diese der Vortriebskraft entgegensetzen. .Dabei wird auch auf eine Angriffsfläche der Dichtlippe 38 des Molches 10 eine Kraft ausgeübt. Die Angriffsfläche der Dichtlippe 38 wird durch die Flächen der Fase 22, der Ringfläche 32 sowie der äußeren Nutwand 30 der Ringnut 26 gebildet. Die auf die Angriffsfläche 22, 32, 30 der Dichtlippe 38 ausgeübte Kraft bewirkt, daß die Dichtlippe 38 des Molches 10 nach außen gedrückt wird, was in Figur 1 durch die mit gestrichelten Linien dargestellte Stellung der Dichtlippe 38 und in Figur 3 durch die gekrümmten Pfeile 78 angedeutet ist. Somit wird die Dichtkante 46 an der Dichtlippe 38 des Molches 10 gegen die Innenwand 76 der Versorgungsleitung 68 angedrückt.

Auf die Angriffsfläche 24', 42', 72' der Dichtlippe 44' des zweiten Molches 10' wird beim Vortrieb desselben innerhalb der Versorgungsleitung 68, wie es in Figur 3 dargestellt ist, keine Kraft ausgeübt. Eine Dichtwirkung zwischen der Dichtkante 48' der Dichtlippe 44' und der Innenwand 76 der Versorgungsleitung 68 erfolgt jedoch dadurch, daß die Dichtkante 48' an der Innenwand 76 anliegt und die Dichtlippe 44' durch Reibungskräfte in Richtung auf die Innenwand 76 der Versorgungsleitung 68 gedrückt wird.

Die Angriffsfläche 24, 42, 72 der Dichtlippe 44 ist insgesamt größer als die Angriffsfläche 22, 32, 30 der Dichtlippe 38. Dies bewirkt, daß die Dichtlippe 44 mit größerer Kraft gegen die Innenwand 74 der Versorgungsleitung 68 angedrückt wird, als dies für die Dichtlippe 38 des Molches 10 der Fall ist, wenn auf beide Dichtlippen 38, 44 die gleiche Kraft ausgeübt wird. Hierdurch erzielt die Dichtlippe 44 des Molches 10 eine relativ zur Dichtlippe 38 höhere Dichtwirkung. Die Dichtwirkung des Molches 10 ist somit bei Vortrieb desselben innerhalb der Versorgungsleitung 68 insgesamt höher als bei einem Molch mit baugleichen Dichtlippen.

Gleichzeitig bleibt ein gewünschter Effekt erhalten:
Kommen die Molche 10 und 10' wieder in eine Position, wie sie in Figur 2 gezeigt ist, so befinden sich meist Lackreste im Zwischenraum 62 zwischen den Molchen 10 und 10'. Wegen dieser Lackreste können Molche mit ebenen Stirnseiten derart zusammenkleben, daß sie manuell voneinander getrennt werden müssen, um wieder einsetzbar zu sein.

Durch die konvexe Ausbildung der freien Stirnfläche 36 bzw. 36' des kreiszylindrischen Vorsprungs 34 bzw. 34' der Molche 10 und 10' ist die Gefahr verringert, daß die beiden Molche 10 und 10' durch den Lack verkleben, da sie sich lediglich punktförmig berühren. Der Zwischenraum 62 kann durch Einspritzen eines Reinigungsmittels effizient von Lackresten befreit werden.

Zwar ist es bevorzugt, daß der Molch 10 auf seiner Stirnseite 20 mit Druckluft zum Vortrieb beaufschlagt wird und der Molch 10 unidirektional verwendet wird. Der Molch 10 kann jedoch durchaus auch bidirektional verwendet werden, d.h., daß er auch von der Stirnseite 18 her mit Druckluft beaufschlagt werden kann, um ihn innerhalb einer Versorgungsleitung vorzutreiben.

## Patentansprüche

1. Molch zum Fördern eines Arbeitsmediums innerhalb einer Versorgungsleitung mit
a) einem Molchkörper (12), welcher innerhalb der Versorgungsleitung von einem Schubmedium antreibbar ist und welcher an einer Stirnseite (18) einen Vorsprung (34) mit einer freien Stirnfläche (36) aufweist;
b) wenigstens einem ersten und einem zweiten an dem Molchkörper (12) angeordneten umlaufenden Dichtelement (38, 44) aus elastomerem Material, welche in Richtung der Längsachse (14) des Molchkörpers (12) voneinander beabstandet sind und koaxial zu der Längsachse (14) des Molchkörpers (12) verlaufen;
wobei
c) die Dichtelemente (38, 44) gegen die Innenwand der Versorgungsleitung andrückbar sind, indem das Arbeitsmedium oder das Schubmedium eine Kraft gegen eine Angriffsfläche (22, 32, 30; 24, 42, 72) des jeweiligen Dichtelements (38, 44) ausübt,
**dadurch gekennzeichnet, daß**
d) die Angriffsfläche (22, 32, 30) des Dichtelements (38), welches der Stirnseite (18) mit dem Vorsprung (34) benachbart ist, kleiner ist als die Angriffsfläche (24, 42, 72) des anderen Dichtelements (44).

2. Molch nach Anspruch 1, **dadurch gekennzeichnet, daß**
das erste Dichtelement (38) und das zweite Dichtelement (44) als erste und zweite Dichtlippe (38, 44) mit einer radial außenliegenden Dichtkante (46, 48) ausgebildet sind.

3. Molch nach Anspruch 1 oder 2, **dadurch gekennzeichnet,**
**daß** der Molchkörper (12) aus elastomerem Material gebildet ist.

4. Molch nach einem der Ansprüche 1 bis 3, **dadurch**
**gekennzeichnet, daß** das elastomere Material ein hydrierter Nitrilkautschuk ist.

5. Molch nach einem der Ansprüche 1 bis 3, **dadurch**
**gekennzeichnet, daß** das elastomere Material ein Fluorelastomer auf der Basis von Vinylidenfluorid-Hexafluorpropylen-Copolymerisaten ist.

6. Molch nach einem der Ansprüche 1 bis 5, **dadurch**
**gekennzeichnet, daß** das elastomere Material eine Härte von 65 bis 100 Shore D aufweist.

7. Molch nach Anspruch 6, **dadurch gekennzeichnet, daß**
das elastomere Material eine Härte von 85 Shore D aufweist.

8. Molch nach einem der Ansprüche 1 bis 7, **dadurch**
**gekennzeichnet, daß** die freie Stirnfläche (36) des Vorsprungs (34) des Molchkörpers (12) konvex ausgebildet ist.

9. Molch nach einem der Ansprüche 1 bis 8, **dadurch**
**gekennzeichnet, daß** der Molchkörper (12) an der Stirnseite (18) mit dem Vorsprung (34) eine koaxial zur Längsachse (14) des Molchkörpers (12) verlaufende Ringnut (26) aufweist.

10. Molch nach einem der Ansprüche 1 bis 9, **dadurch**
**gekennzeichnet, daß** der Molchkörper (12) an der der Stirnseite (18) mit dem Vorsprung (34) gegenüberliegenden Stirnseite (20) eine bezogen auf die Längsachse (14) des Molchkörpers (12) mittig angeordnete Ausnehmung (40) aufweist.

11. Molch nach Anspruch 10, **dadurch gekennzeichnet,**
**daß** die Ausnehmung (40) in unverformten Zustand halbkugelförmig ist.

12. Molch nach einem der Ansprüche 1 bis 11, **dadurch**
**gekennzeichnet, daß** der Molchkörper (12) aus einem ersten Teil (52) und einem damit verbundenen zweiten Teil (54) gebildet ist und einen Permanentmagneten (50) enthält.

13. Molch nach einem der Ansprüche 1 bis 11, **dadurch**
**gekennzeichnet, daß** der Molchkörper (12) eine verschließbare Sackbohrung aufweist, die einen Permanentmagneten (50) aufnimmt.

14. Molch nach Anspruch 13, **dadurch gekennzeichnet,**
**daß** die Sackbohrung durch einen Stopfen verschlossen ist, welcher passgenau in die Sackbohrung eingesetzt ist oder darin verklebt ist, wobei der Stopfen aus dem gleichen Material wie der Molchkörper (12) gefertigt ist.

15. Molch nach Anspruch 13 oder 14 unter Rückbezug auf
Anspruch 10 oder 11, **dadurch gekennzeichnet, daß** die Sackbohrung auf der Seite der Ausnehmung (40) vorgesehen ist.

## Claims

1. Pig for conveying a working medium within a supply line, with
a) a pig body (12) which is capable of being driven within the supply line by a thrust medium and which exhibits at one end (18) a projection (34) with a free end face (36);
b) at least one first and one second circumferential sealing element (38, 44) made of elastomeric material and arranged on the pig body (12), which are spaced from one another in the direction of the longitudinal axis (14) of the pig body (12) and extend coaxially relative to the longitudinal axis (14) of the pig body (12);
whereby
c) the sealing elements (38, 44) are capable of being pressed against the inner wall of the supply line, by the working medium or the thrust medium exerting a force against a surface of application (22, 32, 30; 24, 42, 72) of the respective sealing element (38, 44),
**characterised in that**
d) the surface of application (22, 32, 30) of the sealing element (38) that is adjacent to the end (18) with the projection (34) is smaller than the surface of application (24, 42, 72) of the other sealing element (44).

2. Pig according to Claim 1, **characterised in that** the first sealing element (38) and the second sealing element (44) take the form of first and second sealing lips (38, 44) with a radial outer sealing edge (46, 48).

3. Pig according to Claim 1 or 2, **characterised in that** the pig body (12) is formed from elastomeric material.

4. Pig according to one of Claims 1 to 3, **characterised in that** the elastomeric material is a hydrogenated nitrile rubber.

5. Pig according to one of Claims 1 to 3, **characterised in that** the elastomeric material is a fluoroelastomer based on vinylidene-fluoride-hexafluoropropylene copolymers.

6. Pig according to one of Claims 1 to 5, **characterised in that** the elastomeric material exhibits a hardness of 65 to 100 Shore D.

7. Pig according to Claim 6, **characterised in that** the elastomeric material exhibits a hardness of 85 Shore D.

8. Pig according to one of Claims 1 to 7, **characterised in that** the free end face (36) of the projection (34) of the pig body (12) is of convex design.

9. Pig according to one of Claims 1 to 8, **characterised in that** at the end (18) with the projection (34) the pig body (12) exhibits an annular groove (26) extending coaxially relative to the longitudinal axis (14) of the pig body (12).

10. Pig according to one of Claims 1 to 9, **characterised in that** at the end (20) situated opposite the end (18) with the projection (34) the pig body (12) exhibits a recess (40) that is arranged centrally relative to the longitudinal axis (14) of the pig body (12).

11. Pig according to Claim 10, **characterised in that** the recess (40) is hemispherical in the undeformed state.

12. Pig according to one of Claims 1 to 11, **characterised in that** the pig body (12) is formed from a first part (52) and from a second part (54), connected thereto, and contains a permanent magnet (50).

13. Pig according to one of Claims 1 to 11, **characterised in that** the pig body (12) exhibits a closable blind bore which receives a permanent magnet (50).

14. Pig according to Claim 13, **characterised in that** the blind bore is closed by a stopper which is inserted into the blind bore in exactly fitting manner or is adhesion-bonded therein, the stopper being manufactured from the same material as the pig body (12).

15. Pig according to Claim 13 or 14 with subordinating reference to Claim 10 or 11, **characterised in that** the blind bore is provided on the side of the recess (40).

## Revendications

1. Ecouvillon conçu pour refouler un fluide de travail à l'intérieur d'un conduit d'alimentation, comprenant
a) un corps (12) pouvant être entraîné par un fluide de poussée à l'intérieur du conduit d'alimentation et muni, à une face extrême (18), d'une protubérance (34) offrant une surface frontale libre (36) ;
b) au moins des premier et second éléments périphériques d'étanchement (38, 44) en un élastomère, qui sont disposés sur le corps (12) de l'écouvillon, sont espacés l'un de l'autre dans la direction de l'axe longitudinal (14) dudit corps (12) de l'écouvillon, et s'étendent coaxialement audit axe longitudinal (14) dudit corps (12) de l'écouvillon ;
sachant que
c) les éléments d'étanchement (38, 44) peuvent être pressés contre la paroi intérieure du conduit d'alimentation sous l'action d'une force développée, par le fluide de travail ou par le fluide de poussée, contre la surface (22, 32, 30 ; 24, 42, 72) de venue en prise de l'élément d'étanchement (38, 44) considéré,
**caractérisé par le fait que**
d) la surface (22, 32, 30) de venue en prise de l'élément d'étanchement (38), voisin de la face extrême (18) munie de la protubérance (34), est plus petite que la surface (24, 42, 72) de venue en prise de l'autre élément d'étanchement (44).

2. Ecouvillon selon la revendication 1, **caractérisé par le fait que** le premier élément d'étanchement (38) et le second élément d'étanchement (44) sont réalisés sous la forme de première et seconde lèvres d'étanchement (38, 44) à arête d'étanchement (46, 48) occupant une position radialement extérieure.

3. Ecouvillon selon la revendication 1 ou 2, **caractérisé par le fait que** le corps (12) dudit écouvillon est formé d'un matériau élastomère.

4. Ecouvillon selon l'une des revendications 1 à 3, **caractérisé par le fait que** le matériau élastomère est un caoutchouc nitrile hydrogéné.

5. Ecouvillon selon l'une des revendications 1 à 3, **caractérisé par le fait que** le matériau élastomère est un élastomère fluoré à base de copolymères de fluorure de vinylidène-hexafluoropropylène.

6. Ecouvillon selon l'une des revendications 1 à 5, **caractérisé par le fait que** le matériau élastomère présente une dureté Shore D comprise entre 65 et 100.

7. Ecouvillon selon la revendication 6, **caractérisé par le fait que** le matériau élastomère présente une dureté Shore D de 85.

8. Ecouvillon selon l'une des revendications 1 à 7, **caractérisé par le fait que** la surface frontale libre (36) de la protubérance (34) du corps (12) dudit écouvillon est de réalisation convexe.

9. Ecouvillon selon l'une des revendications 1 à 8, **caractérisé par le fait que** le corps (12) dudit écouvillon présente, sur la face extrême (18) munie de la protubérance (34), une rainure annulaire (26) s'étendant coaxialement à l'axe longitudinal (14) dudit corps (12) de l'écouvillon.

10. Ecouvillon selon l'une des revendications 1 à 9, **caractérisé par le fait que** le corps (12) dudit écouvillon présente, à la face extrême (20) tournée à l'opposé de la face extrême (18) munie de la protubérance (34), un évidement (40) occupant une position centrale vis-à-vis de l'axe longitudinal (14) dudit corps (12) de l'écouvillon.

11. Ecouvillon selon la revendication 10, **caractérisé par le fait que** l'évidement (40) est de forme hémisphérique à l'état non déformé.

12. Ecouvillon selon l'une des revendications 1 à 11, **caractérisé par le fait que** le corps (12) dudit écouvillon est constitué d'une première partie (52) et d'une seconde partie (54) reliée à cette dernière, et renferme un aimant permanent (50).

13. Ecouvillon selon l'une des revendications 1 à 11, **caractérisé par le fait que** le corps (12) dudit écouvillon présente un trou borgne obturable recevant un aimant permanent (50).

14. Ecouvillon selon la revendication 13, **caractérisé par le fait que** le trou borgne est obturé par un bouchon inséré dans ledit trou borgne avec ajustement précis, ou collé dans ledit trou, ledit bouchon étant fabriqué dans le même matériau que le corps (12) dudit écouvillon.

15. Ecouvillon selon la revendication 13 ou 14 rapportée à la revendication 10
ou 11, **caractérisé par le fait que** le trou borgne est prévu du côté de l'évidement (40).
